Europäisches Patentamt

European Patent Office

Office européen des brevets

(11) Veröffentlichungsnummer: **0 171 562**
**B1**

(12) **EUROPÄISCHE PATENTSCHRIFT**

(51) Int. Cl.⁴: **G 01 B 3/00, G 01 B 9/02**

(45) Veröffentlichungstag der Patentschrift:
**18.10.89**

(21) Anmeldenummer: **85108061.4**

(22) Anmeldetag: **28.06.85**

(54) Positionsmesseinrichtung.

(30) Priorität: 11.08.84 DE 3429684

(43) Veröffentlichungstag der Anmeldung:
19.02.86 Patentblatt 86/8

(45) Bekanntmachung des Hinweises auf die Patenterteilung:
18.10.89 Patentblatt 89/42

(84) Benannte Vertragsstaaten:
AT CH DE FR GB IT LI NL SE

(56) Entgegenhaltungen:
DE-B- 2 846 768

(73) Patentinhaber: **Dr. Johannes Heidenhain GmbH,
Nansenstrasse 17, D-8225 Traunreut (DE)**

(72) Erfinder: **Dangschat, Holmer, Dipl.-Ing.,
Heinz-von-Stein-Strasse 25, D-8225 Traunreut (DE)**

## Beschreibung

Die Erfindung betrifft eine Positionsmeßeinrichtung gemäß dem Oberbegriff des Anspruchs 1.

Derartige Positionsmeßeinrichtungen werden insbesondere bei Mehrkoordinatenmeßmaschinen zur Ermittlung der Abmessungen von Prüfkörpern sowie bei numerisch gesteuerten Bearbeitungsmaschinen zum Positionieren von Werkzeugen zur Bearbeitung von Werkstücken eingesetzt.

Aus der DE-PS 2 846 768 ist eine gekapselte Längenmeßeinrichtung bekannt, bei der ein Maßstab und eine den Maßstab abtastende Abtasteinheit zur Abschirmung gegen Umwelteinflüsse in einem längserstreckten Hohlkörper eingebracht sind. Dieser Hohlkörper weist einen in Meßrichtung durchgehenden Längsschlitz auf, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Aus der DE-OS 2 113 477 ist ein Laserinterferometer zur Messung der Relativlage zweier Objekte mit einem längs einer Meßstrecke beweglichen, mit dem einen Objekt verbundenen Reflektor bekannt, der mitsamt der Meßstrecke zur Abschirmung gegen Umwelteinflüsse in einem mit dem anderen Objekt verbundenen evakuierten Hohlkörper eingebracht ist. Der Hohlkörper weist zwecks Durchführung eines Mitnehmers für den beweglichen Reflektor einen in Meßrichtung verlaufenden Längsschlitz auf, der mittels biegsamer Dichtlippen abgedichtet ist, die den Mitnehmer zwischen sich aufnehmen.

Bei diesen Längenmeßeinrichtungen müssen die Dichtlippen zur möglichst hermetischen Abschirmung des Hohlkörpers eng am Mitnehmer anliegen und daher elastisch mit hoher Rückstellkraft ausgebildet sein. Infolge der durch die hohen Rückstellkräfte auftretenden Reibungskräfte am Mitnehmer bei der Meßbewegung kann der Mitnehmer Deformationen in Meßrichtung erfahren, die der Meßgenauigkeit abträglich sind. Bei einem Laserinterferometer können selbst die geringsten Kräfte auf den Mitnehmer durch die Dichtlippen zu einer Beeinflussung der Meßgenauigkeit führen, da die Messungen im Wellenlängenbereich des Lichtes erfolgen. Der Mitnehmer überträgt die reibungsbedingten Verformungen in Meßrichtung direkt auf den Meßreflektor, was Verfälschungen des Meßergebnisses zur Folge haben kann.

Der Erfindung liegt die Aufgabe zugrunde, bei einer Positionsmeßeinrichtung der genannten Gattung eine Ausbildung eines Mitnehmers für ein bewegliches Bauteil anzugeben, bei der auf den Mitnehmer durch die Dichtelemente einwirkende Reibungseffekte keine Auswirkungen auf die Meßgenauigkeit haben.

Diese Aufgabe wird erfindungsgemäß durch die kennzeichnenden Merkmale des Anspruchs 1 gelöst.

Die mit der Erfindung erzielten Vorteile bestehen insbesondere darin, daß durch die vorgeschlagene zweiteilige Ausbildung des Mitnehmers auf einfache Weise auf den äußeren Mitnehmer einwirkende Reibungseffekte und damit verbundene Verformungen des äußeren Mitnehmers in Meßrichtung nicht auf das bewegliche Bauteil übertragen werden, so daß derartige Reibungseffekte keinen negativen Einfluß mehr auf die Meßgenauigkeit ausüben.

Vorteilhafte Ausbildungen der Erfindung entnimmt man den abhängigen Ansprüchen.

Ausführungsbeispiele der Erfindung werden anhand der Zeichnung näher erläutert.

Es zeigen

Figur 1a, b einen Querschnitt und einen Längsschnitt einer gekapselten Längenmeßeinrichtung und

Figur 2a, b einen Querschnitt und einen Längsschnitt eines Laserinterferometers.

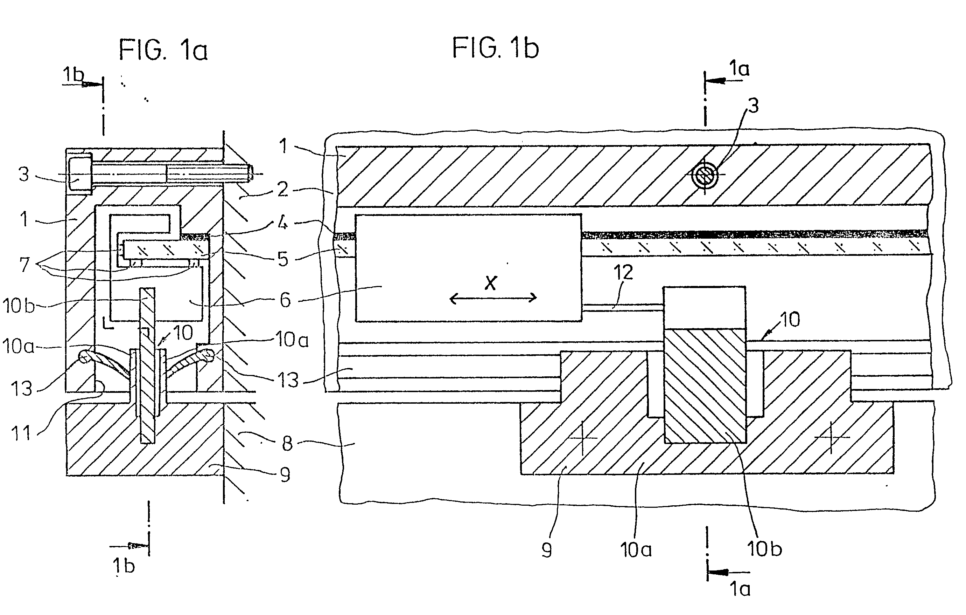

In Figur 1a ist eine gekapselte Längenmeßeinrichtung im Querschnitt und in Figur 1b im Längsschnitt dargestellt. Diese Längenmeßeinrichtung weist ein Gehäuse 1 in Form eines Hohlkörpers auf, das an einem ersten zu messenden Objekt 2 in Form eines Schlittens einer nicht gezeigten Bearbeitungsmaschine mittels Schrauben 3 befestigt ist. An einer Innenfläche des Gehäuses 1 ist mittels einer Klebeschicht 4 ein inkrementaler Maßstab 5 angebracht, dessen Teilung von einer Abtasteinheit 6 auf photoelektrischem Wege abgetastet wird, die in nicht gezeigter Weise eine Abtastplatte mit Abtastfeldern für die Teilung sowie eine Beleuchtungseinheit und den Abtastfeldern zugeordnete Photoelemente aufweist. Die Abtasteinheit 6 ist mittels Rollen 7 an zwei zueinander senkrechten Führungsflächen des Maßstabs 5 geführt, die die Hilfsführung für die Abtasteinheit 6 bilden. An einem zweiten zu messenden Objekt 8 in Form eines Betts der Bearbeitungsmaschine ist in beliebiger Weise ein Montagefuß 9 mit einem Mitnehmer 10 befestigt, der durch einen in Meßrichtung X verlaufenden Längsschlitz 11 in den Innenraum des Gehäuses 1 hineinragt und über eine in Meßrichtung X steife Kupplung 12 mit der Abtasteinheit 6 zur Messung der Relativlage zwischen dem Schlitten 2 und dem Bett 8 der Bearbeitungsmaschine verbunden ist. Zur Abschirmung des Innenraumes des ansonsten völlig geschlossenen Gehäuses 1 ist der Längsschlitz 11 durch zwei dachförmig angeordnete Dichtlippen 13 verschlossen, durch die der im Bereich des Längsschlitzes 11 schwertförmig ausgebildete Mitnehmer 10 hindurchgreift. Die Relativbewegung des Schlittens 2 bezüglich des Betts 8 wird vom Mitnehmer 10 über die Kupplung 12 auf die Abtasteinheit 6 übertragen, die die bei der Abtastung der Teilung des Maßstabs 5 gewonnenen elektrischen periodischen Analogsignale einer nicht gezeigten Auswerteeinrichtung zur Ermittlung von Positionsmeßwerten zuführt.

Zur möglichst hermetischen Abschirmung des Gehäuses 1 müssen die Dichtlippen 13 eng am schwertförmigen Mitnehmer 10 anliegen und daher elastisch mit hoher Rückstellkraft ausgebildet sein. Infolge der durch die hohen Rückstellkräfte auftretenden Reibungskräfte am Mitnehmer 10 bei der Meßbewegung in Meßrichtung X kann der Mitnehmer 10 Deformationen in Meßrichtung X erfahren, die zu Meßungenauigkeiten führen können.

Damit derartige auf den Mitnehmer 10 einwirkende Reibungseffekte keine Auswirkungen auf die Meßgenauigkeit haben, wird erfindungsgemäß ein zweiteiliger Mitnehmer 10 vorgeschlagen. Dieser zweiteilige Mitnehmer 10 besteht aus einem äußeren Mitnehmer 10a in Form eines Hohlprofils, der nur am Montagefuß 9 befestigt ist und keine Verbindung mit der Abtasteinheit 6 besitzt. Im Inneren des hohlen äußeren Mitnehmers 10a ist ein innerer Mitnehmer 10b angeordnet, der starr am Montagefuß 9 befestigt und mit der Abtasteinheit 6 über die in Meßrichtung X steife Kupplung 12 verbunden ist. Zwischen dem äußeren Mitnehmer 10a und dem inneren Mitnehmer 10b besteht keine direkte Verbindung. Der äußere Mitnehmer 10a ist im Bereich der Dichtelemente 13 schwertförmig ausgebildet, um die Dichtelemente 13 bei der Meßbewegung mit möglichst geringer Spaltbildung aufteilen zu können. Die von den Dichtlippen 13 auf den äußeren Mitnehmer 10a bei der Meßbewegung ausgeübten Reibungskräfte und die dadurch bedingten Verformungen des äußeren Mitnehmers 10a in Meßrichtung X werden nicht auf den inneren Mitnehmer 10b und damit auch nicht über die Kupplung 12 auf die Abtasteinheit 6 übertragen, so daß derartige Reibungseffekte der Dichtlippen 13 auf den Mitnehmer 10 keine nachteiligen Auswirkungen auf die Meßgenauigkeit haben.

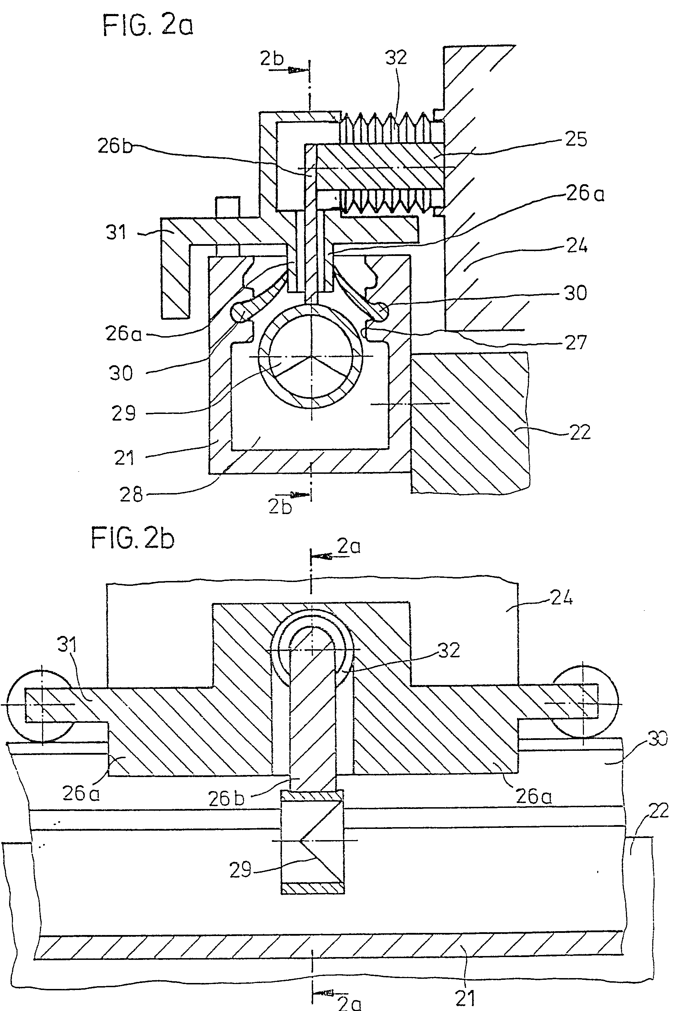

In Figur 2a ist ein Laserinterferometer im Querschnitt und in Figur 2b im Längsschnitt dargestellt. Dieses Laserinterferometer weist ein Gehäuse 21 in Form eines Hohlkörpers auf, das an einem ersten zu messenden Objekt 22 in Form eines Betts einer nicht gezeigten Meßmaschine mittels Schrauben befestigt ist. An einem zweiten zu messenden Objekt 24 in Form eines Meßschlittens der Meßmaschine ist in beliebiger Weise ein Montagefuß 25 mit einem Mitnehmer 26 befestigt, der durch einen in Meßrichtung X verlaufenden Längsschlitz 27 in den evakuierten Innenraum 28 des Gehäuses 21 hineinragt und ein längs einer Meßstrecke bewegliches Bauteil 29 in Form eines Reflektors mit dem zweiten zu messenden Objekt 24 verbindet. Zur Abschirmung der Meßstrecke und des beweglichen Reflektors 29 im evakuierten Innenraum 28 des Gehäuses 21 ist der Längsschlitz 27 des Gehäuses 21 durch zwei dachförmig angeordnete Dichtlippen 30 verschlossen, durch die der im Bereich der Dichtlippen 30 schwertförmig ausgebildete Mitnehmer 26 hindurchgreift. Die Relativbewegung des ersten Objekts 22 bezüglich des zweiten Objekts 24 wird vom Mitnehmer 26 auf den Reflektor 29 für einen Meßstrahl übertragen, der in bekannter Weise mit einem Bezugsstrahl interferiert. Die sich aufgrund der Differenz der optischen Weglängen zwischen dem Meßstrahl und dem Bezugsstrahl bei der Meßbewegung des Reflektors 29 ergebenden Interferenzerscheinungen werden zur Gewinnung von Positionsmeßwerten für die Relativlage der beiden zu messenden Objekte 22, 24 ausgewertet.

Zur möglichst hermetischen Abschirmung des Gehäuses 21 müssen die Dichtlippen 30 eng am schwertförmigen Mitnehmer 26 anliegen und daher elastisch mit hoher Rückstellkraft ausgebildet sein. Infolge der durch die hohen Rückstellkräfte auftretenden Reibungskräfte am Mitnehmer 26 bei der Meßbewegung in Meßrichtung X kann der Mitnehmer 26 Deformationen in Meßrichtung X erfahren, die zu Meßungenauigkeiten führen können.

Damit derartige auf den Mitnehmer 26 einwirkende Reibungskräfte keine Auswirkungen auf die Meßgenauigkeit haben, wird ebenfalls ein zweiteiliger Mitnehmer 26 vorgeschlagen. Dieser zweiteilige Mitnehmer 26 besteht aus einem äußeren Mitnehmer 26a in Form eines Hohlprofils, der an einem Hilfsschlitten 31 befestigt ist und keine Verbindung mit dem Reflektor 29 besitzt. Im Inneren des hohlen äußeren Mitnehmers 26a ist ein innerer Mitnehmer 26b angeordnet, der starr am Montagefuß 25 und am Reflektor 29 befestigt ist. Zwischen dem äußeren Mitnehmer 26a und dem inneren Mitnehmer 26b besteht keine direkte Verbindung. Der äußere Mitnehmer 26a ist im Bereich der Dichtlippen 30 schwertförmig ausgebildet, um die Dichtlippen 30 bei der Meßbewegung mit möglichst geringer Spaltbildung aufteilen zu können. Die von den Dichtlippen 30 auf den äußeren Mitnehmer 26a bei der Meßbewegung ausgeübten Reibungskräfte und die dadurch bedingten Verformungen des äußeren Mitnehmers 26a in Meßrichtung X werden nicht auf den inneren Mitnehmer 26b und damit auf den Reflektor 29, sondern auf den Hilfsschlitten 31 übertragen, so daß derartige Reibungseffekte der Dichtlippen 30 auf den Mitnehmer 26 keine nachteiligen Auswirkungen auf die Meßgenauigkeit haben.

Bei der Meßbewegung des zweiten zu messenden Objekts 24 in Form des Meßschlittens, der über den inneren Mitnehmer 26b starr mit dem Reflektor 29 des Laserinterferometers verbunden ist, wird zur völligen mechanischen Trennung des Meßschlittens 24 vom Hilfsschlitten 31 der Hilfsschlitten 31 von einer gesonderten, nicht dargestellten Antriebseinheit synchron zur Meßbewegung des Meßschlittens 24 verschoben. Der Hohlraum zwischen dem äußeren Mitnehmer 26a und dem inneren Mitnehmer 26b ist an einem Ende im evakuierten Innenraum 28 des Gehäuses 21 unverschlossen und am anderen Ende mittels einer elastischen Dichtung 32 in Form eines Faltenbalgs verschlossen, der zwischen dem Hilfsschlitten 31 und dem Meßschlitten 24 angeordnet ist.

**Patentansprüche**

1. Positionsmeßeinrichtung zur Messung der Relativlage zweier Objekte mit einem längs einer Meßstrecke beweglichen, mit dem einen Objekt (8; 24) verbundenen Bauteil (6; 29), das mitsamt der Meßstrecke zur Abschirmung gegen Umwelteinflüsse in einem mit dem anderen Objekt (2; 22) verbundenen Hohlkörper (1; 21) eingebracht ist.

der zwecks Durchführung eines Mitnehmers (10; 26) für das bewegliche Bauteil (6; 29) einen in Meßrichtung verlaufenden, durch wenigstens ein Dichtelement (13; 30) abgedichteten Längsschlitz (11; 27) aufweist, dadurch gekennzeichnet, daß der Mitnehmer (10; 26) zweiteilig, in Form eines äußeren Mitnehmers (10a; 26a) und eines inneren Mitnehmers (10b; 26b) ausgebildet ist, daß zwischen dem äußeren Mitnehmer (10a; 26a) und dem inneren Mitnehmer (10b; 26b) keine kräfteübertragende Verbindung besteht, daß nur der äußere Mitnehmer (10a; 26a) mit dem wenigstens einen Dichtelement (13; 30) in mechanischem Kontakt steht und daß der innere Mitnehmer (10b; 26b) starr mit dem einen zu messenden Objekt (8; 24) und in Meßrichtung (X) steif mit dem beweglichen Bauteil (6; 29) verbunden ist.

2. Meßeinrichtung nach Anspruch 1, dadurch gekennzeichnet, daß der innere Mitnehmer (10b; 26b) im Inneren des hohl ausgebildeten äußeren Mitnehmers (10a; 26a) angeordnet ist.

3. Meßeinrichtung nach Anspruch 1, dadurch gekennzeichnet, daß der innere Mitnehmer (10b) über eine in Meßrichtung (X) steife Kupplung (12) mit dem beweglichen Bauteil (6), das in Form einer Abtasteinheit für einen inkrementalen Maßstab (5) ausgebildet ist, verbunden ist.

4. Meßeinrichtung nach Anspruch 1, dadurch gekennzeichnet, daß der äußere Mitnehmer (26a) mit einem Hilfsschlitten (31) und der innere Mitnehmer (26b) mit dem einen zu messenden Objekt (24), das in Form eines Meßschlittens ausgebildet ist, verbunden ist.

5. Meßeinrichtung nach Anspruch 4, dadurch gekennzeichnet, daß der Hilfsschlitten (31) von einer gesonderten Antriebseinheit synchron zur Verschiebung des Meßschlittens (24) verschiebbar ist.

6. Meßeinrichtung nach Anspruch 1, dadurch gekennzeichnet, daß der innere Mitnehmer (26b) starr mit dem beweglichen Bauteil (29), das in Form eines Reflektors für den Meßstrahl eines Interferometers ausgeführt ist, verbunden ist.

## Claims

1. Position measuring device for measuring the relative position of two objects, with a unit (6; 29) movable along a measuring track and connected to the one object (8; 24), which unit, together with the measuring track is fitted in a hollow body (1; 21) connected to the other object (2; 22) for protection against the environment, the hollow body (1; 21) having a longitudinal slot (11; 27) running in the measuring direction for the passage of a carrier (10; 26) for the movable unit (6; 29), sealed by at least one sealing element (13; 30), characterized in that the carrier (10; 26) is formed in two parts in the form of an outer carrier (10a; 26a) and an inner carrier (10b; 26b), in that there is no force-transmitting connection between the outer carrier (10a; 26a) and the inner carrier (10b; 26b), in that only the outer carrier (10a; 26a) is in mechanical contact with the at least one sealing element (13; 30), and in that the inner carrier (10b; 26b) is rigidly connected to the one object (8; 24) to be measured and is connected stiff in the measuring direction (X) to the movable unit (6; 29).

2. Measuring device according to claim 1, characterized in that the inner carrier (10b; 26b) is arranged in the interior of the hollow outer carrier (10a; 26a).

3. Measuring device according to claim 1, characterized in that the inner carrier (10b) is connected through a coupling (12) stiff in the measuring direction (X) to the movable unit (6), which is formed as a sensing unit for an incremental measuring scale (5).

4. Measuring device according to claim 1, characterized in that the outer carrier (26a) is connected to an auxiliary slide (31) and the inner carrier (26b) is connected to the one object (24) to be measured, which is in the form of a measuring slide.

5. Measuring device according to claim 4, characterized in that the auxiliary slide (31) is displaceable by a separate drive unit in synchronism with the displacement of the measuring slide (24).

6. Measuring device according to claim 1, characterized in that the inner carrier (26b) is rigidly connected to the movable unit (29), which is implemented as a reflector for the measuring beam of an interferometer.

## Revendications

1. Dispositif de mesure de position pour mesurer la position relative de deux objets avec un élément de construction (6; 29) mobile le long d'une ligne de mesure, relié à l'un des objets (8; 24), élément qui est logé, avec la ligne de mesure, dans un corps creux (1; 21) relié à l'autre objet (2; 22), dans un but de protection contre les influences extérieures, ledit corps creux présentant une fente longitudinale (11; 27) isolée de manière étanche par au moins un élément d'étanchéité (13; 30), s'étendant dans le sens de la mesure, pour le passage d'un élément d'entraînement (10; 26) pour l'élément de construction mobile (6; 29), caractérisé en ce que l'élément d'entraînement (10; 26) est réalisé en deux parties, sous forme d'un élément d'entraînement extérieur (10a; 26a) et d'un élément d'entraînement intérieur (10b; 26b), en ce qu'il n'y a aucune liaison à transmission de forces entre l'élément d'entraînement extérieur (10a; 26a) et l'élément d'entraînement intérieur (10b; 26b), en ce que seul l'élément d'entraînement extérieur (10a; 26a) est en contact mécanique avec l'un au moins des éléments d'étanchéité (13; 30) et en ce que l'élément d'entraînement intérieur (10b; 26b) est rigidement relié à l'un des objets (8; 24) à mesurer et rigidement relié à l'élément de construction mobile (6; 29) dans la direction de la mesure (X).

2. Dispositif de mesure selon la revendication 1, caractérisé en ce que l'élément d'entraînement intérieur (10b; 26b) est disposé à l'intérieur de l'élément d'entraînement extérieur (10a; 26a) qui est réalisé creux.

3. Dispositif de mesure selon la revendication 1, caractérisé en ce que l'élément d'entraînement intérieur (10b) est relié, par l'intermédiaire d'un accouplement (12) rigide dans le sens de la mesure (X), à l'élément de construction mobile (6) réalisé sous forme d'une unité de balayage pour une règle graduée par incréments (5).

4. Dispositif de mesure selon la revendication 1, caractérisé en ce que l'élément d'entraînement extérieur (26a) est relié à un chariot auxiliaire (31) et l'élément d'entraînement intérieur (26b) est relié à l'un des objets à mesurer (24) qui est réalisé sous la forme d'un chariot de mesure.

5. Dispositif de mesure selon la revendication 4, caractérisé en ce que le chariot auxiliaire (31) est susceptible de se déplacer en synchronisme avec le déplacement du chariot de mesure (24), grâce à une unité d'entraînement séparée.

6. Dispositif de mesure selon la revendication 1, caractérisé en ce que l'élément d'entraînement intérieur (26b) est rigidement relié à l'élément de construction mobile (29) qui est réalisé sous la forme d'un réflecteur pour le rayon de mesure d'un interféromètre.

FIG. 1a

FIG. 1b

EP 0 171 562 B1

FIG. 2a

FIG. 2b